# EUROPEAN PATENT APPLICATION

(11) **EP 4 446 958 A1**
(43) Date of publication of application: **16.10.2024**
(21) Application number: 23167811.1
(22) Date of filing: 13.04.2023
(51) Int. Cl.: G06Q 10/06, F24F 1/00, F24F 11/00, G06Q 10/063, G06Q 10/0631, G06Q 50/06, G16Y 10/35, G16Y 20/10, G16Y 20/30, F24F 130/10, F24F 140/60

(54) **ENERGY DEMAND OPTIMIZATION AND CONTROL METHOD FOR REFRIGERATION AND AIR CONDITIONING SYSTEMS**

(71) Applicant: Robert Bosch GmbH, 70442 Stuttgart (DE)
(72) Inventor: Bhuiyan, Shihabul, 573943 Singapur (SG); Cola, Fabrizio, 534635 Singapore (SG); Tanyildiz, Baris, 574036 Singapore (SG)

(57) **Abstract**

A Refrigeration And Air Conditioning, RAC, system and a method of operating a RAC system. The RAC system is configured to determine a renewable energy supply for powering the RAC system and/or determining a maximum power limit for the RAC system; determine whether the renewable energy supply and/or the maximum power limit are sufficient for operating the RAC system at a current temperature setting; adjust the current temperature setting if the renewable energy supply and/or the maximum power limit are not sufficient for operating the RAC system, wherein adjusting the current temperature setting comprises determining whether a new temperature setting such that the renewable energy supply and/or the maximum power limit are sufficient for operating the RAC system lies within a predetermined temperature range representative of an acceptable user comfort level variation; and generate a notification if the new temperature setting is outside the predetermined temperature range.

## Description

### FIELD OF INVENTION

The present invention relates broadly to a method of operating a Refrigeration and Air Conditioning system, and to a Refrigeration and Air Conditioning system.

### BACKGROUND

Any mention and/or discussion of prior art throughout the specification should not be considered, in any way, as an admission that this prior art is well known or forms part of common general knowledge in the field.

Energy consumptions of Heating, Ventilation and Air Conditioning (HVAC) or Refrigeration And Air Conditioning (RAC) systems account for significant portions of overall energy consumptions. It is noted that HVAC is covering RAC, and the terms can be used interchangeably. Therefore, energy management systems for HVAC or RAC systems that could significantly reduce energy consumption will be very useful. However, based on the current state of the art within the sustainable HVAC or RAC domain, most of the energy management systems are basically monitoring systems that rely heavily on human interventions for actual management and controls. There are very few intelligent optimized energy control systems based on automatic control sequence to specifically control system operating conditions.

There is thus a need to explore, develop and implement efficient control algorithms that will allow the generated power to be efficiently consumed.

Embodiments of the present invention seek to address that need.

### SUMMARY

In accordance with a first aspect of the present invention, there is provided a method of operating a Refrigeration And Air Conditioning, RAC, system comprising the steps of:
determining a renewable energy supply for powering the RAC system and/or determining a maximum power limit for the RAC system;
determining whether the renewable energy supply and/or the maximum power limit are sufficient for operating the RAC system at a current temperature setting;
adjusting the current temperature setting if the renewable energy supply and/or the maximum power limit are not sufficient for operating the RAC system, wherein adjusting the current temperature setting comprises determining whether a new temperature setting such that the renewable energy supply and/or the maximum power limit are sufficient for operating the RAC system lies within a predetermined temperature range representative of an acceptable user comfort level variation; and
generating a notification if the new temperature setting is outside the predetermined temperature range.

The method may comprise adjusting a ventilation setting of the RAC if the renewable energy supply and/or the maximum power limit are not sufficient for operating the RAC system.

The method may comprise
determining a renewable energy forecast for a period;
determining a predicted load for the period;
and determining whether the renewable energy forecast is sufficient to meet the predicted load; and
switching operation of the RAC to off-grid if the renewable energy forecast is sufficient to meet the predicted load, or
determining whether a new temperature setting such that the renewable energy forecast is sufficient to meet the predicted load lies within the predetermined temperature range representative of the acceptable user comfort level variation and generating the notification if the new temperature setting is outside the predetermined temperature range.

The method may comprise adjusting the current temperature setting to an optimum comfort setting if the renewable energy supply and/or the maximum power limit are greater than required for operating the RAC system under the current temperature setting.

The predetermined temperature range representative of the acceptable user comfort level variation may be based on ASHRAE 55 standard measured based on predicted mean vote, PMV.

In accordance with a second aspect of the present invention, there is provided a Refrigeration And Air Conditioning, RAC, system configured to
determine a renewable energy supply for powering the RAC system and/or determining a maximum power limit for the RAC system;
determine whether the renewable energy supply and/or the maximum power limit are sufficient for operating the RAC system at a current temperature setting;
adjust the current temperature setting if the renewable energy supply and/or the maximum power limit are not sufficient for operating the RAC system, wherein adjusting the current temperature setting comprises determining whether a new temperature setting such that the renewable energy supply and/or the maximum power limit are sufficient for operating the RAC system lies within a predetermined temperature range representative of an acceptable user comfort level variation; and
generate a notification if the new temperature setting is outside the predetermined temperature range.

The RAC system may be configured to adjust a ventilation setting of the RAC if the renewable energy supply and/or the maximum power limit are not sufficient for operating the RAC system.

The RAC system may be configured to
determine a renewable energy forecast for a period;
determine a predicted load for the period;
determine whether the renewable energy forecast is sufficient to meet the predicted load; and
switch operation of the RAC to off-grid if the renewable energy forecast is sufficient to meet the predicted load, or
determine whether a new temperature setting such that the renewable energy forecast is sufficient to meet the predicted load lies within the predetermined temperature range representative of the acceptable user comfort level variation and generate the notification if the new temperature setting is outside the predetermined temperature range.

The RAC system may be configured to adjust the current temperature setting to an optimum comfort setting if the renewable energy supply and/or the maximum power limit are greater than required for operating the RAC system under the current temperature setting.

The predetermined temperature range representative of an acceptable user comfort level variation may be based on ASHRAE 55 standard measured based on predicted mean vote, PMV.

### BRIEF DESCRIPTION OF THE DRAWINGS

Embodiments of the invention will be better understood and readily apparent to one of ordinary skill in the art from the following written description, by way of example only, and in conjunction with the drawings, in which:
Figure 1 shows a block diagram flow chart for sustainable cooling/heating priority control, according to an example embodiment.
Figure 2 shows a block diagram flow chart for RAC demand profiling within user-defined maximum power limit control, according to an example embodiment.
Figure 3 shows a chart illustrating operation and control scenarios/cases for solar-connected RACs, according to an example embodiment.
Figure 4 shows a block diagram flow chart for renewable source forecast optimizer, according to an example embodiment.
Figure 5 shows a block diagram flow chart for combined sustainable source forecast and user-defined maximum power limit control, according to an example embodiment.
Figure 6 shows a block diagram illustrating RAC user operation demand profile and comfort profile generation, for use in example embodiments.
Figure 7 shows a schematic drawing illustrating details of the thermal comfort profile based on ASHRAE 55 standard and measured based on PMV, in an example embodiment.
Figure 8 shows a schematic diagram illustrating implementation of energy demand optimization in refrigeration and air conditioning system, according to an example embodiment.

### DETAILED DESCRIPTION

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

Embodiments described in the context of one of the systems or methods are analogously valid for the other systems or methods.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments. In general, in the following claims, the terms used should not be construed to limit the systems and methods to the specific embodiments disclosed in the specification and the claims, but should be construed to include all processing systems that operate under the claims. Accordingly, the systems and methods are not limited by the disclosure, but instead the scope of the systems and methods is to be determined entirely by the claims.

Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import refer to this application as a whole and not to any particular portions of this application. When the word "or" is used in reference to a list of two or more items, that word covers all of the following interpretations of the word: any of the items in the list, all of the items in the list and any combination of the items in the list.

In the context of various embodiments, the articles "a", "an" and "the" as used regarding a feature or element include a reference to one or more of the features or elements.

As used herein, the term "and/or" includes any and all combinations of one or more of the associated listed items.

As used herein, the terms 'first' and 'second', unless otherwise stated, are used for purposes of clarity and do not imply order or precedence.

Aspects of the systems and methods described herein may be implemented as functionality programmed into any of a variety of circuitry, including programmable logic devices (PLDs), such as field programmable gate arrays (FPGAs), programmable array logic (PAL) devices, electrically programmable logic and memory devices and standard cell-based devices, as well as application specific integrated circuits (ASICs). Some other possibilities for implementing aspects of the system include: microcontrollers with memory (such as electronically erasable programmable read only memory (EEPROM)), embedded microprocessors, firmware, software, etc. Furthermore, aspects of the system may be embodied in microprocessors having software-based circuit emulation, discrete logic (sequential and combinatorial), custom devices, fuzzy (neural) logic, quantum devices, and hybrids of any of the above device types. Of course the underlying device technologies may be provided in a variety of component types, e.g., metal-oxide semiconductor field-effect transistor (MOSFET) technologies like complementary metal-oxide semiconductor (CMOS), bipolar technologies like emitter-coupled logic (ECL), polymer technologies (e.g., silicon-conjugated polymer and metal-conjugated polymer-metal structures), mixed analog and digital, etc.

The various functions or processes disclosed herein may be described as data and/or instructions embodied in various computer-readable media, in terms of their behavioral, register transfer, logic component, transistor, layout geometries, and/or other characteristics. Computer-readable media in which such formatted data and/or instructions may be embodied include, but are not limited to, non-volatile storage media in various forms (e.g., optical, magnetic or semiconductor storage media) and carrier waves that may be used to transfer such formatted data and/or instructions through wireless, optical, or wired signaling media or any combination thereof. When received into any of a variety of circuitry (e.g. a computer), such data and/or instruction may be processed by a processing entity (e.g., one or more processors).

As used herein, the term "data" may be understood to include information in any suitable analog or digital form, for example, provided as a file, a portion of a file, a set of files, an electronic signal or stream, a portion of a signal or stream, a set of signals or streams, and the like. The term data, however, is not limited to the aforementioned examples and may take various forms and represent any information as understood in the art.

Embodiments of the present invention can provide an intelligent real-time and/or predictive energy management for continuous adaptive control to maximize any renewable energy source-based, for example Photo Voltaic (PV) based, cooling or heating operation. In example embodiments, this can be achieved by intelligent source selection and demand optimization by aligning the cooling/heat-pump energy consumption demand based on the renewable energy source availability. This can advantageously ensure both energy efficiency and thermal comfort. Furthermore, through the use of inputs from meterless energy metering algorithm, the real-time RAC demand might be predicted within satisfactory levels of accuracy, according to example embodiments.

In example embodiments, adjustment of set temperature and ventilation step / speed is managed depending on RAC user thermal comfort level. In the embodiments described herein, thermal comfort level is defined based on ASHRAE 55 standard and it is measured based on PMV (predicted mean vote) scale methodology. However, the present invention is not limited to the use of ASHRAE 55 standard measured based on PMV, and other definitions/measures for the user thermal comfort level may be used in different embodiments.

PMV is representing the most comfortable (0 PMV), slightly warm / slightly cool (+0.5 PMV / -0.5 PMV), hot / cold(+1 PMV / -1 PMV) or too hot / too cold (+2 PMV / -2 PMV) temperatures linearly (i.e., 0 PMV= 25°C, +0.5 PMV = 26°C, +1 PMV =27°C etc.). Calculation of PMV value relies on user's metabolic rate, surrounding air properties (temperature, humidity, CO2 rate, air speed), solar radiation, clothing level (type of cloth, short, long etc) and air quality properties (PM2,5 - metric for 0.5-3 micron size particles measurement for air quality indexing, VOC (volatile organic compound) rates etc.). User physical comfort feedback under different thermal conditions is represented with PMV numerical values (such as -3,-2,-1,0,+1,+2, +3). The PMV value varies from region to region (Asia, Europe, Middle East, North America etc.), gender (male, female), age groups (kid, adult, elder etc.). PMV data of each user can be built based on the above information and collection of comfort feedback from the user, and then the thermal comfort profile can be used to provide most comfortable temperature when indoor and outdoor air properties will be changed. This can advantageously grant a comfortable HVAC or RAC operation for end users, according to example embodiments.

More specifically, according to example embodiments, using, for example, ASHRAE PMV database and identifying RAC user's comfort profile (PMV) based on user location/region, gender and age group can help to classify a user comfort profile to use as a constrain for RAC temperature and optionally ventilation settings to optimize the RAC operation to meet renewable energy source-based cooling/heating targets. When e.g. PV power supply is not meeting the RAC demand, optimization that is based on user thermal comfort profile according to example embodiments can help to keep renewable energy source-based cooling/heating as maximum as possible. This can also reduce the unnecessary operation of the RAC to avoid overcooling and/or overheating. Table 1 shows an example extracted data set from ASHRAE's PMV sample database.

**Table 1**

| **Region** | **Subject ID** | **Gender** | **Air Temp.** | **Relative Humidity** | **Air velocity** | **Metabloic rate** | **Clothing rate** | **Thermal sensation** | **Thermal preference** | **Set Temp.** | **PMV** |
|---|---|---|---|---|---|---|---|---|---|---|---|
| N.America | 10 | female | 22.3 | 61 | 0.03 | 1.70 | 0.95 | 2 | cooler | 28.1 | 0.5 |
| N.America | 14 | female | 23 | 59 | 0.08 | 1.10 | 1.07 | 2 | cooler | 27.2 | 0.4 |
| Asia | 15 | female | 22 | 61 | 0.04 | 1.21 | 0.88 | 0 | no change | 24.8 | -0.07 |
| Asia | 17 | female | 23.2 | 58 | 0.03 | 1.77 | 0.59 | 0 | no change | 25.5 | 0.31 |
| Oceania | 21 | male | 22.2 | 62 | 0.15 | 1.48 | 0.83 | 0 | no change | 26 | 0.05 |
| Middle East | 22 | male | 21.2 | 65 | 0.15 | 1.50 | 0.66 | -1 | warmer | 23.1 | -0.56 |
| Europe | 4 | male | 21.9 | 62 | 0.06 | 1.33 | 1.02 | 1 | NA | 26.6 | 0.19 |
| Europe | 7 | male | 21.4 | 65 | 0.03 | 1.33 | 0.71 | -3 | warmer | 23.4 | -0.32 |
| S.America | 8 | male | 21.6 | 63 | 0.25 | 1.26 | 1.1 | 1 | no change | 26.8 | 0.01 |

In an example embodiment, changes to Set Temperature of the RAC will be limited to keep a comfort level of RAC user(s) that is linked with PMV value(s), for example it will be limited to +/- 0.5 PMV (slightly cool, slightly warm) since it has been recognised by the inventors that the resulting comfort dissatisfaction level will be less than 10% (considered as comfortable), based on the ASHRAE PMV database. In case renewable energy source-based supply, e.g. PV supply, is much lower than the RAC energy demand, then optionally increasing or decreasing of ventilation speed will support keeping the PMV level within the range (e.g. for Set temperature from 21°C to 27°C, ventilation step change from low or mid to high or super high can be used to maintain overall comfort within e.g. the +/- 0.5 PMV range). In case renewable energy source-based supply, e.g. PV supply, is higher than the RAC energy demand, then instead of running the RAC at a lower comfortable level (i.e. PMV ≠ 0), maximizing comfort (i.e. 0 PMV) based on a new temperature/ventilation setting can be performed for sustainable and comfortable cooling/heating, according to an example embodiment.

### First example embodiment: RAC demand profiling for sustainable cooling/heating priority control

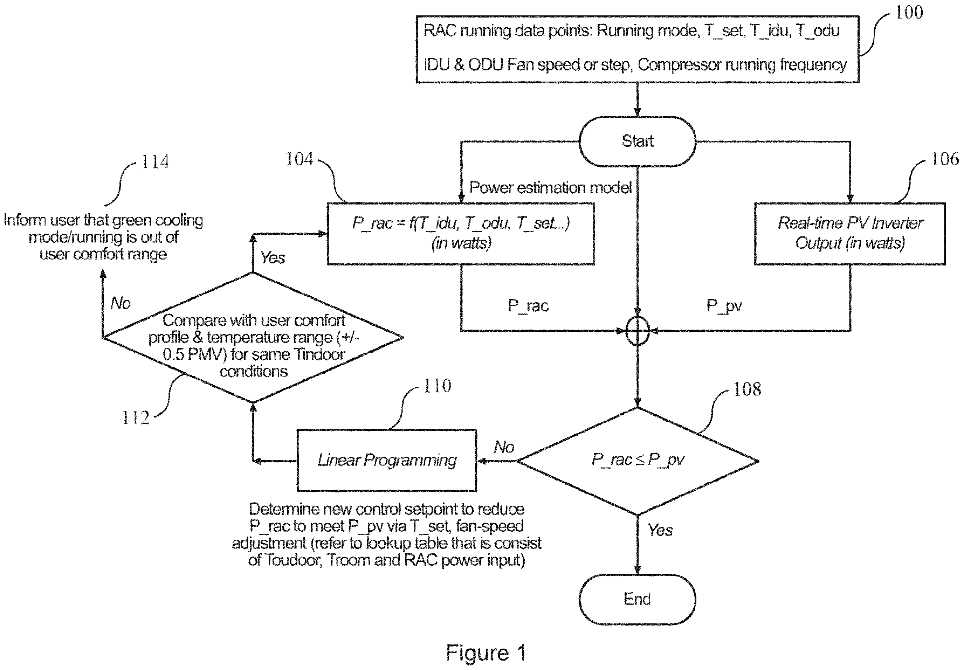

With reference to Figure 1, various RAC running points characterise the operation of the RAC, indicated at 100. In the algorithm according to the first example embodiment, demand as a function of parameters including energy consumption estimation of the RAC, indoor / outdoor air temperature, compressor run frequency (hertz), and daytime is determined at 104 as estimated power consumption P_rac versus time for each day in a lookup table based on a power estimation model. Various power estimation models are understood in the art and are therefore not described in detail herein.

In the first example embodiment, the RAC demand profile from 104 will be used for monitoring and optimizing the RAC operation setting (for example Set Temperature, T_set) and ventilation step/speed change) to maximize the sustainable cooling/heating penetration, e.g. from a PV enabled power supply. It is noted that the information that renewable energy is available, can also be received via an interface for example from the power provider or from the cloud. The information may alternatively or additionally comprise that cheap energy is available, for example, because a lot of renewable Energy is available.

The cooling is relying on e.g. the PV available supply P_pv indicated at 106 and meeting of the RAC energy demand. In case the RAC demand P_rac is higher than PV power supply P_pv at 108, the control algorithm will check a lookup table (a table that includes, for example, compressor running frequency, estimated power consumption and outdoor/indoor air temperature) to determine new control setpoint(s) to reduce P_rac. Specifically, in case the RAC demand P_rac is higher than the PV availability, then linear program/algorithm 110 will refer to the lookup table to choose target indoor room temperature (as T_set) under the same outdoor temperature to meet the PV availability P_pv. The RAC control algorithm according to an example embodiment uses an embedded cooling/heat pump cycle software to adjust running the frequency of compressor (inverter control) to meet the target T_set temperature under measured outdoor air temperature, as is understood in the art and is therefore not described in detail herein.

While adjusting the temperature and ventilation speed to reduce the RAC power demand, another factor is advantageously added to check/consider a thermal comfort level to avoid uncomfortable cooling/heating by using, for example, the PMV profile of the RAC user(s) at 112. The T_set change will be limited to keep the comfort level of the RAC user(s) that is linked with PMV (predictive mean vote) value, and it will e.g. be limited to +/- 0.5 (slightly cool, slightly warm), which can still achieve a comfort dissatisfaction level of less than 10% (considered as Comfortable). In case the PV supply is much lower than the RAC energy demand, then increasing or decreasing of ventilation speed can preferably support the linked PMV level being maintained within the range (for example, T_set from 21°C to 27°C where ventilation step from low or mid to high or super high is used to maintain overall comfort e.g. within +/- 0.5 range). In case the PV supply is higher than the RAC energy demand, then instead of running the RAC at a less comfortable point, maximizing the comfort level (PMV=0) will be used for the new setting to provide best comfort with sustainable cooling.

Accordingly, in the first example embodiment the PMV profile is advantageously considered to limit the set temperature and optionally ventilation setting changes so as to preferably maintain the user comfort level in the +0.5 / -0.5 PMV range, at 112. In case the RAC demand is not meeting the PMV range limit, then the user will notified accordingly at 114, meaning that while the RAC demand has been lowered to maintain sustainable cooling, the comfort level has been lowered also, i.e. outside the +0.5 / -0.5 PMV range. The notification of the user can be implemented in various forms, including, but not limited to, a notification shown at a display of the RAC, a notification shown at a display of a smartphone or other user device, an audio signal generated from the RAC, an audio signal generated from the smartphone or other user device, a notification by SMS message, a notification by a message on any other messaging platform, and/or a notification by email.

The algorithm according to the first example embodiment works reverse in heating mode, i.e. decreasing ofT_set temperature to meet the renewable, e.g. PV supply, power (e.g. is T_set is 30°C, the algorithm decreases Tset.net down to 24~27°C to reduce the RAC power demand at 108). Like during cooling, the PMV profile will be considered to limit the set temperature and optionally ventilation to maintain the user comfort level within e.g. the +0.5 / -0.5 PMV range during heating. In case the RAC demand is not meeting the PMV range limit, then the user will again be informed accordingly at 114, meaning that while the RAC demand has been lowered to maintain sustainable heating, the comfort level has been lowered also, like in the cooling demand control described above.

With the above control method according to the first example embodiment, the aim is to preferably maximize the sustainable cooling/heating, e.g. from the PV power supply, by adjusting T_set and optionally the ventilation setting (e.g. depending on whether the change delta T_set to the new T_set.new is more than 3°C, then ventilation speed will be increased to meet the user comfort level) and considering the, for example, PMV (thermal comfort) level of the RAC user autonomously and periodically (e.g. 1~5min interval for next control setting, i.e. next running of the algorithm of Figure 1).

### Second example embodiment: RAC demand profiling within user-defined maximum power limit control

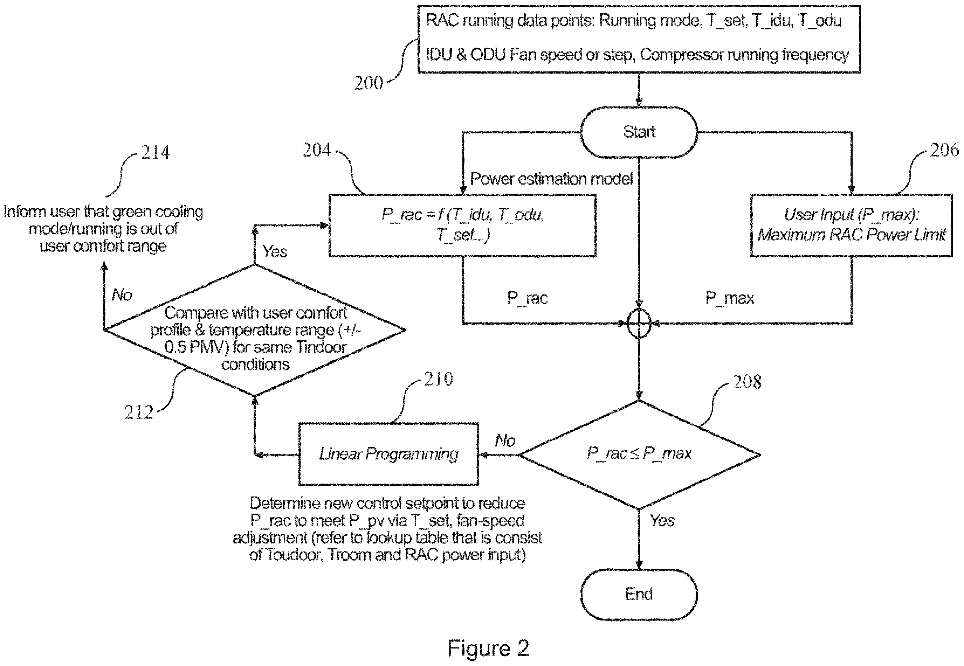

With reference to Figure 2, various RAC running points characterise the operation of the RAC, indicated at 200. In the algorithm, demand as a function of parameters including energy consumption estimation of RAC, indoor / outdoor air temperature, compressor run frequency (hertz), and daytime is determined at 204 as estimated power consumption P_rac versus time for each day in a lookup table based on a power estimation model. Various power estimation models are understood in the art and are therefore not described in detail herein.

In the example embodiment, the RAC demand profile from 204 will be used for monitoring and optimizing the RAC operation setting (for example Set Temperature (T_set) and optionally ventilation step/speed change) with reference to a user input maximum RAC power limit, P_max.

The cooling is relying on P_max indicated at 206 meeting the RAC energy demand. In case the RAC demand P_rac is higher than P_max at 208, the control algorithm will check a lookup table (a table that includes, for example, compressor running frequency, estimated power consumption and outdoor/indoor air temperature) to determine new control setpoint(s) to reduce P_rac. Specifically, in case the RAC demand is higher than P_max, then linear program/algorithm 210 will refer to the lookup table to choose target indoor room temperature (as T_set) under the same outdoor temperature to meet P_max. The RAC control algorithm according to the second example embodiment uses an embedded cooling / heat pump cycle software to adjust running frequency of compressor (inverter control) to meet the target T_set temperature under measured outdoor air temperature, as is understood in the art and is therefore not described in detail herein.

While adjusting the temperature and ventilation speed to reduce the RAC power demand, another factor is advantageously added according to the second example embodiment to check/consider a thermal comfort level to avoid uncomfortable cooling/heating by using, for example, the PMV profile of the RAC user(s) at 212. The T_set change will be limited to keep the comfort level of RAC user(s) that is linked with PMV (predictive mean vote) value so that it will be maintained in e.g. the +/- 0.5 range (slightly cool, slightly warm), which can still achieve a comfort dissatisfaction level of less than 10% (considered as Comfortable). In case P_max is much lower than the RAC energy demand P_rac, then increasing or decreasing of ventilation speed can support maintaining the PMV level within the range (for example, T_set from 21°C to 27°C where ventilation step from low or mid to high or super high is used to maintain overall comfort within +/- 0.5 range). In case P_max is higher than the RAC energy demand, then instead of running RAC at a less comfortable point, maximizing the comfort level (PMV=0) will be chosen as the new setting to provide best comfort with sustainable cooling.

Accordingly, in the second example embodiment the PMV profile is advantageously considered to limit the set temperature and ventilation to maintain the user comfort level in e.g. the +0.5 / -0.5 PMV range, at 212. In case the RAC demand is not meeting the PMV range limit, then the user will be notified accordingly at 214, meaning that while the RAC demand has been lowered to meet P_max, the comfort level has been lowered also, i.e. outside the +0.5 / -0.5 PMV range. The notification of the user can be implemented in various forms, including, but not limited to, a notification shown at a display of the RAC, a notification shown at a display of a smartphone or other user device, an audio signal generated from the RAC, an audio signal generated from the smartphone or other user device, a notification by SMS message, a notification by a message on any other messaging platform, and/or a notification by email.

The algorithm according to the second example embodiment works reverse in heating mode, i.e. decreasing of T_set temperature to meet P_max (e.g. T_set is 30°C, the algorithm decreases Tset.net down to 24~27°C to reduce the RAC power demand if required at 208). Like during cooling, the PMV profile will be considered to limit the set temperature and optionally ventilation so as to maintain the user comfort level within e.g. the +0.5 / -0.5 PMV range. In case the RAC demand is not meeting the PMV range limit, then the user will be informed accordingly at 214, meaning that while the RAC demand has been lowered to meet P_max, the comfort level has been lowered also, like in the cooling demand control described above.

With the above control method according to the second example embodiment, the aim is to preferably meet the user set P_max, by adjusting T_set and optionally the ventilation setting (e.g. depending on whether the change delta T_set to reach a new T_set.new is more than 3°C, then ventilation speed will be increased to meet the user comfort level) and considering, for example, the PMV (thermal comfort) level of the RAC user autonomously and periodically (e.g. 1~5min interval for next control setting, i.e. next running of the algorithm of Figure 2).

### Third example embodiment: Combined RAC demand profiling for sustainable cooling/heating priority control within user-defined maximum power limit control

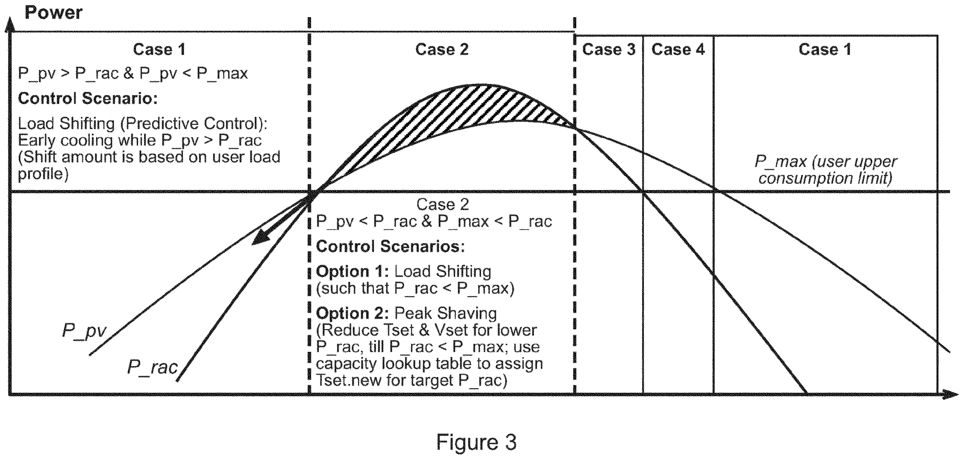

In a third example embodiment, the RAC demand profiling for sustainable cooling/heating priority control of the first example embodiment can be combined with the RAC demand profiling within user-defined maximum power limit control of the second example embodiment. Depending on e.g. the PV supply, P_pv, RAC demand, P_rac, and user-defined maximum power limit, P_max, there can be four cases to control the RAC with different scenarios as shown in Figure 3 and summarized in Table 2 below.

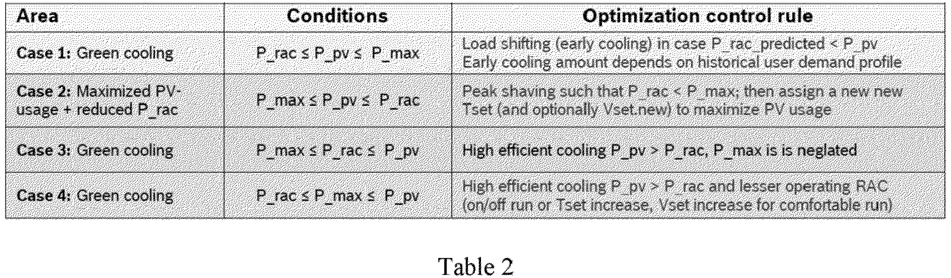

Again, in the third embodiment, the comfort level, e.g. the PMV factor, will be considered where P_pv and/or P_max are not be sufficient enough. Specifically, new temperature and optionally ventilation setting(s) will be considered based on a comfort level allowance, for example (+0.5 / -0.5 PMV range).

### Fourth example embodiment: Renewable source forecast optimizer

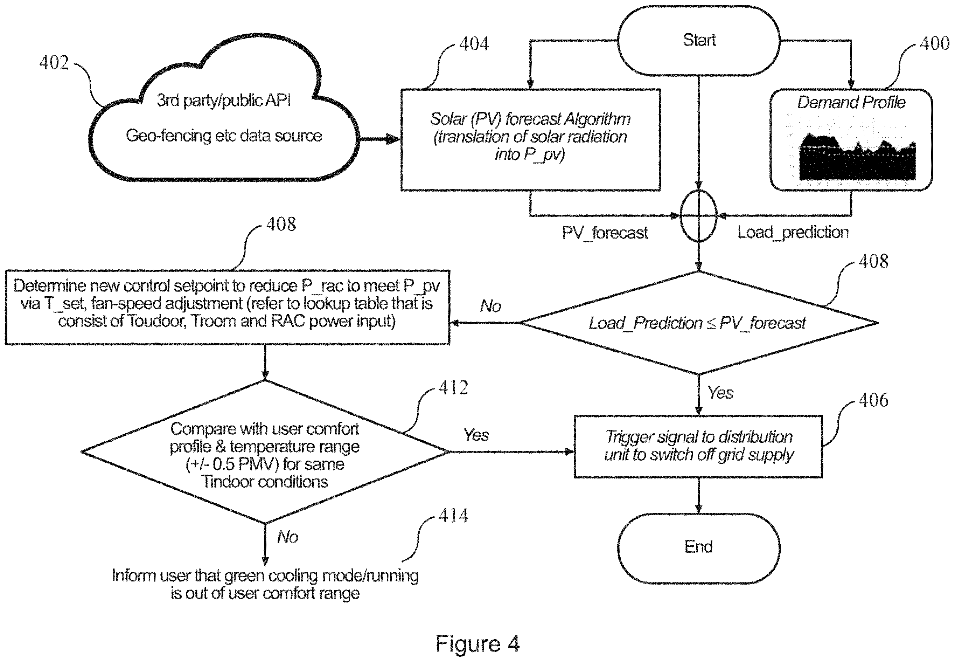

With reference to Figure 4, based on historical data analysis, it is possible to create a daytime based load profile of the RAC user(s) to determine Load_prediction at 400. Load_prediction can be used in conjunction with renewable source, e.g. solar PV energy, generation prediction outputs from external sources 402 which are based on solar radiation forecast. Various forecast methods/providers for renewable energy sources are understood in the art and are therefore not described in detail herein. In this example embodiment, the solar radiation forecast is used to determine PV_forecast at 404, and based on PV_forecast and Load_prediction, a predictive control can be realized in the fourth example embodiment. This involves the development of a rule-based look-ahead controller which can simultaneously check power consumption limit determined by the user demand profile to obtain Load_prediction and the forecast PV availability, PV-forecast, e.g. for the next 15-30 mins intervals.

Hence, MPC (model predictive control) according to the fourth example embodiment is based on, for example, PV prediction combined with a RAC user load profile, and is used to implement early cooling/heating or reduced cooling/heating operation of the RAC for sustainable cooling/heating. The fourth example embodiment aims to run the RAC off-grid by triggering a signal to turn off grid supply at 406 depending on forecast renewable source-availability in e.g. the next 15-30 mins. The control loop 408, 410, 412 is checking e.g. the PV availability and historical RAC demand to provide continuous and predictive control of RAC.

Specifically, in case Load_prediction is higher than PV_forecast in 408, then linear program/algorithm 410 will refer to a lookup table to choose target indoor room temperature (as T_set) under the same outdoor temperature to meet PV_forecast and run the RAC off-grid by triggering the signal to turn off grid supply at 406. The RAC control algorithm according to the fourth example embodiment uses an embedded cooling / heat pump cycle software to adjust the running frequency of compressor (inverter control) to meet the target T_set temperature under measured outdoor air temperature, as is understood in the art and is therefore not described in detail herein. In case the RAC demand is not meeting the PMV range limit, then the user will be informed accordingly at 414, meaning that while the RAC demand has been lowered to meet PV_forecast, the comfort level has been lowered also, i.e. outside the +0.5 / - 0.5 PMV range.

While adjusting the temperature and ventilation speed to reduce the RAC power demand, another factor is advantageously added according to the fourth example embodiment to check/consider a thermal comfort level to avoid uncomfortable cooling/heating by using, for example, the PMV profile of the RAC user(s) at 412. The T_set change will be limited to keep the comfort level of RAC user(s) that is linked with PMV (predictive mean vote) value such that it is limited to +/- 0.5 (slightly cool, slightly warm) which can still achieve a comfort dissatisfaction level of less than 10% (considered as Comfortable). In case PV_forecast is much lower than Load_Prediction, then optionally increasing or decreasing of the ventilation speed can support PMV level within the range (for example, for T_set from 21°C to 27°C where ventilation step from low or mid to high or super high is used to maintain the overall comfort within +/- 0.5 PMV range).

The algorithm according to the fourth example embodiment works reverse in heating mode, i.e. decreasing of T_set temperature to meet P_max (e.g. T_set is 40°C, the algorithm decreases Tset.net down to 24~27°C to reduce the RAC power demand if required at 410). Like during cooling, the PMV profile will be considered to limit the set temperature and optionally ventilation maintain the user comfort level within e.g. the +0.5 / -0.5 PMV range. In case the RAC demand is not meeting PV_forecast, then the user will be notified accordingly at 414, meaning that while the RAC demand has been lowered to meet PV_forecast, the comfort level has been lowered also, like in the cooling demand control described above. The notification of the user can be implemented in various forms, including, but not limited to, a notification shown at a display of the RAC, a notification shown at a display of a smartphone or other user device, an audio signal generated from the RAC, an audio signal generated from the smartphone or other user device, a notification by SMS message, a notification by a message on any other messaging platform, and/or a notification by email.

### Fifth example embodiment: Combined sustainable source forecast and user-defined maximum power limit control

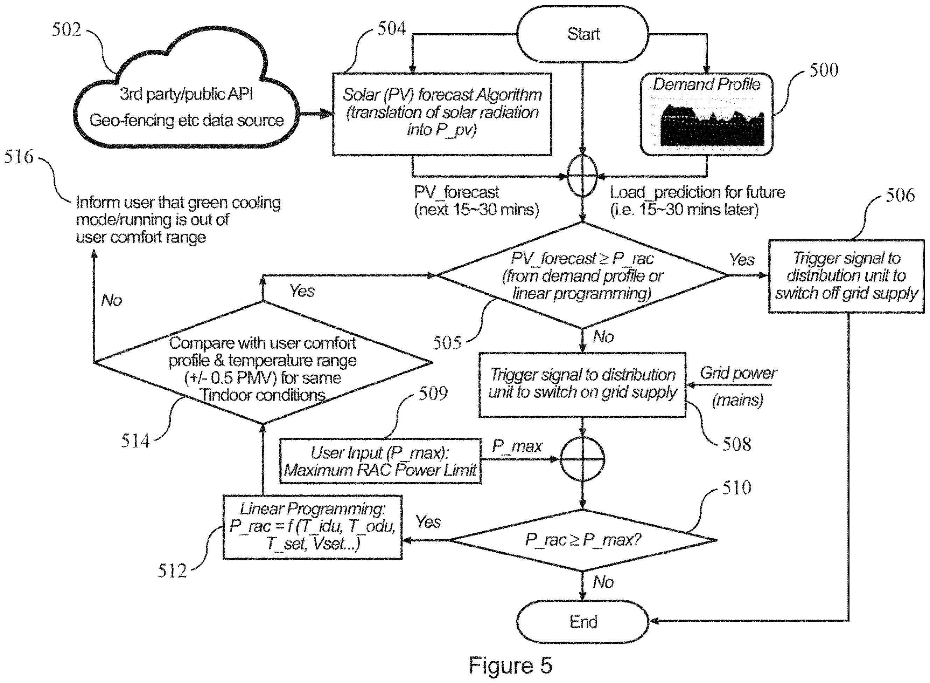

With reference to Figure 5, based on historical data analysis, it is possible to create a daytime based load profile of the RAC user to determine Load_prediction at 500. Load_prediction can be used in conjunction with renewable source, e.g. solar PV energy, generation prediction outputs from external sources 502 which are based on solar radiation forecast. Various forecast methods/providers for renewable energy sources are understood in the art and are therefore not described in detail herein. In the fifth example embodiment, the solar radiation forecast is used to determine PV_forecast at 504, and based on PV_forecast and Load_prediction, a predictive control can be realized in the fifth example embodiment. This involves the development of a rule-based look-ahead controller which can simultaneously check power consumption limit determined by a user demand profile to obtain Load_prediction and the forecast PV availability, PV-forecast, e.g. for the next 15-30 mins intervals.

Again, MPC (model predictive control) according to the fifth example embodiment is based on, for example, PV prediction combined with a RAC user load profile, and is used to implement early cooling/heating or reduced cooling/heating operation of the RAC for sustainable cooling/heating. The fifth example embodiment aims to run the RAC off-grid by triggering a signal to turn off grid supply at 506 depending on whether the PV_forecast in e.g. the next 15-30 mins is greater or equal to Load_prediction at 505.

On the other hand, if PV_forecast is lower than Load_prediction at 505, then grid power/mains operation is triggered by a signal to switch on grid supply at 508. Based on a user-input P-max at 509, if RAC power P_rac is equal or greater than P_max at 510, then linear program/algorithm 512 will refer to a lookup table to choose a target indoor room temperature (as T_set) under the same outdoor temperature to meet P_max. The RAC control algorithm according to the fifth example embodiment uses an embedded cooling / heat pump cycle software to adjust running frequency of compressor (inverter control) to meet the target T_set temperature under measured outdoor air temperature, as is understood in the art and is therefore not described in detail herein.

While adjusting the temperature and ventilation speed to reduce the RAC power demand, another factor is advantageously added according to the fifth example embodiment to check/consider a thermal comfort level to avoid uncomfortable cooling/heating by using, for example, the PMV profile of RAC user(s) at 514. The T_set change will be limited to keep the comfort level of the RAC user(s) that is linked with the PMV (predictive mean vote) value such that it will be maintained in e.g. the +/- 0.5 range (slightly cool, slightly warm), which can still achieve a comfort dissatisfaction level of less than 10% (considered as Comfortable). In case the RAC demand is not meeting the PMV range limit, then the user will be notified accordingly at 516, meaning that while the RAC demand has been lowered to meet PV_forecast, the comfort level has been lowered also, i.e. outside the +0.5 / -0.5 PMV range. The notification of the user can be implemented in various forms, including, but not limited to, a notification shown at a display of the RAC, a notification shown at a display of a smartphone or other user device, an audio signal generated from the RAC, an audio signal generated from the smartphone or other user device, a notification by SMS message, a notification by a message on any other messaging platform, and/or a notification by email.

In case PV_max is much lower than P_rac at 510, then optionally increasing or decreasing of ventilation speed can support maintaining the PMV level within the range (for example, for T_set from 21°C to 27°C where ventilation step from low or mid to high or super high is used to maintain overall comfort within +/- 0.5 range). On the other hand, the algorithm ends if P_rac is < P_max at 510, or if the signal to the switch off grid supply is triggered at 506, until the next prediction period of e.g. 15-30 mins.

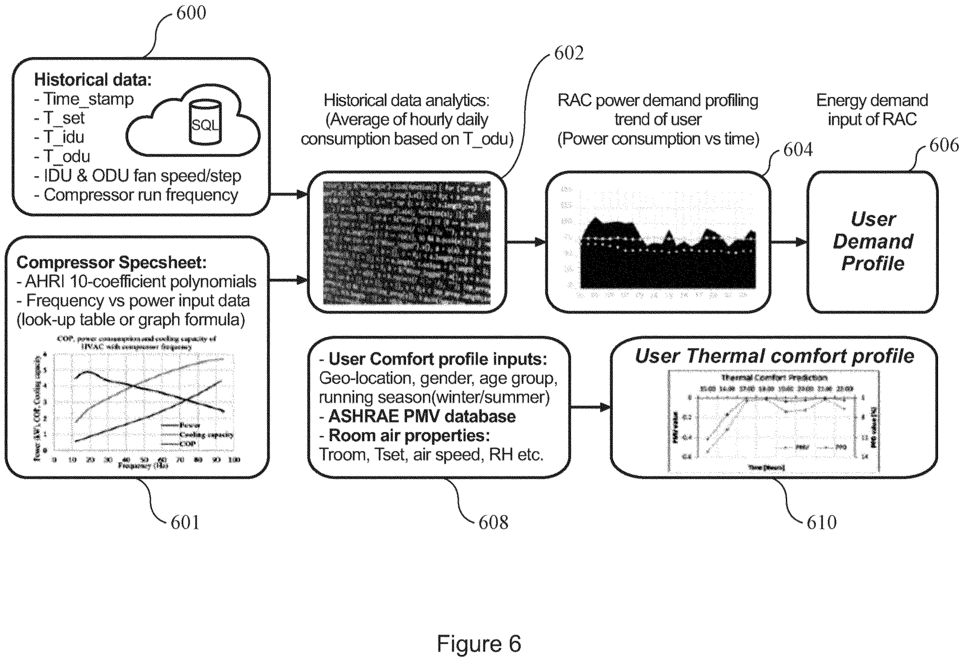

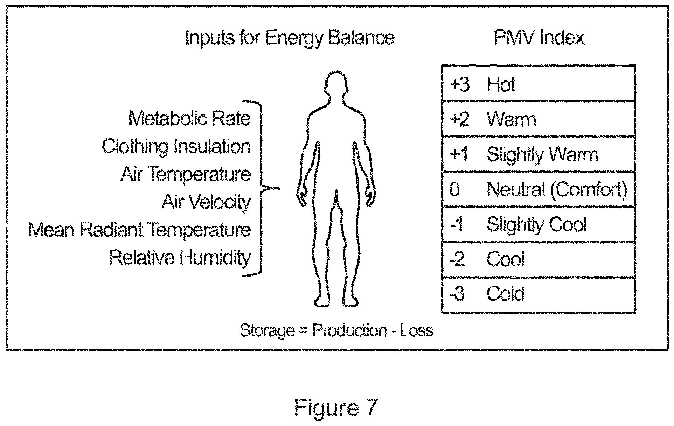

Figure 6 shows a block diagram illustrating RAC user operation demand profile and comfort profile generation, for use in example embodiments. For generating a RAC user operation demand profile, historical data 600 from the RAC and the RAC specification data, in this example Compressor Specsheet 601, are gathered and analysed at 602 for determining power consumption vs time data at 604, for generating the user demand profile at 606. For generating a RAC user comfort profile, at 608 data about user comfort in relation to various parameters is analysed, for example based on ASHRAE 55 standard and measured based on PMV, to generate the user thermal comfort profile at 610. Figure 7 provides further details of the thermal comfort profile based on ASHRAE 55 standard and measured based on PMV, in an example embodiment.

As described above, example embodiments of the present invention advantageously apply and implement thermal comfort as an optimization factor when renewable energy supply, e.g. PV supply, is insufficient, and/or as an optimization factor when user power limitation is active, and/or as an optimisation factor in a forecast optimizer based on historical running data and e.g. solar prediction to meet the predicted PV supply in the next e.g. 15-30 minutes for early cooling/heating or cooling/heating adjustments in advance. Preferably, the comfort level and possible reduction of the RAC demand chosen to be more energy efficient are notified to the user(s).

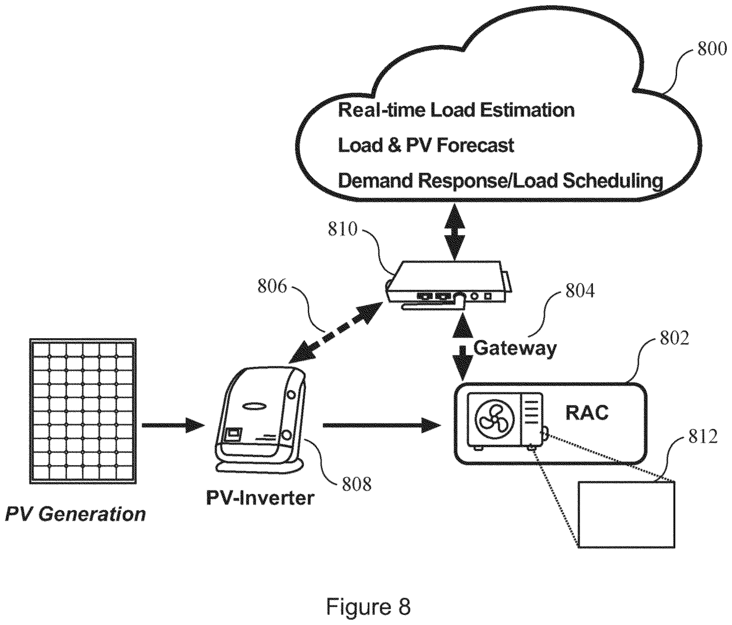

With reference to Figure 8, an embodiment of the present invention can have one or more of the following features and associated advantages.
- Control feature (maximizing the PV penetration to RAC energy supply) will operate on a cloud 800 based application, communicating with RAC 802 via IoT gateway 804 and PV-inverter gateway 806, rather than using a 3rd party field device.
- The RAC 802 user(s) will have the ability to activate the interface to their PV inverter 808 using a modem 810 to enable sustainable cooling. This will give them the ability to trigger the sustainable cooling control for the connection of the RAC 802 to the solar-PV inverter 808. It is noted that in different embodiments, the modem 810 can be an interface or a Gateway, for example an IP Gateway, or Modbus Gateway or EEBus Gatway or Matter Gateway.

- The RAC 802 user(s) are provided with a live status-indicator in the RAC Human-Machine Interface (HMI) 812 that informs when sustainable cooling is active. For instance, this can be an icon in tile preview, call-out area etc.
- The RAC users will have the ability to choose
   1. Whether the RAC 802 is running solely on PV energy (maximum sustainable cooling)
   2. Whether the RAC 802 is running on a combination of grid + solar-PV energy base on their required set-temperature and other control parameters (optimized or maximized sustainable cooling)
- Reporting of sustainable cooling ratio / penetration for RAC 802 users to be able to monitor control success/performance via the RAC Human-Machine Interface (HMI) 812. The HMI 812 can also be used for displaying the notification of the user if the new temperature setting determined in the methods/algorithms according to example embodiments is outside the predetermined temperature range.

## Claims

1. A method of operating a Refrigeration And Air Conditioning, RAC, system comprising the steps of:
determining a renewable energy supply for powering the RAC system and/or determining a maximum power limit for the RAC system;
determining whether the renewable energy supply and/or the maximum power limit are sufficient for operating the RAC system at a current temperature setting;
adjusting the current temperature setting if the renewable energy supply and/or the maximum power limit are not sufficient for operating the RAC system, wherein adjusting the current temperature setting comprises determining whether a new temperature setting such that the renewable energy supply and/or the maximum power limit are sufficient for operating the RAC system lies within a predetermined temperature range representative of an acceptable user comfort level variation; and
generating a notification if the new temperature setting is outside the predetermined temperature range.

2. The method of claim 1, comprising adjusting a ventilation setting of the RAC if the renewable energy supply and/or the maximum power limit are not sufficient for operating the RAC system.

3. The method of claims 1 or 2, comprising
determining a renewable energy forecast for a period;
determining a predicted load for the period;
and determining whether the renewable energy forecast is sufficient to meet the predicted load; and
switching operation of the RAC to off-grid if the renewable energy forecast is sufficient to meet the predicted load, or
determining whether a new temperature setting such that the renewable energy forecast is sufficient to meet the predicted load lies within the predetermined temperature range representative of the acceptable user comfort level variation and generating the notification if the new temperature setting is outside the predetermined temperature range.

4. The method of any one of claims 1 to 3, comprising adjusting the current temperature setting to an optimum comfort setting if the renewable energy supply and/or the maximum power limit are greater than required for operating the RAC system under the current temperature setting.

5. The method of any one of claims 1 to 4, wherein the predetermined temperature range representative of the acceptable user comfort level variation is based on ASHRAE 55 standard measured based on predicted mean vote, PMV.

6. A Refrigeration And Air Conditioning, RAC, system configured to
determine a renewable energy supply for powering the RAC system and/or determining a maximum power limit for the RAC system;
determine whether the renewable energy supply and/or the maximum power limit are sufficient for operating the RAC system at a current temperature setting;
adjust the current temperature setting if the renewable energy supply and/or the maximum power limit are not sufficient for operating the RAC system, wherein adjusting the current temperature setting comprises determining whether a new temperature setting such that the renewable energy supply and/or the maximum power limit are sufficient for operating the RAC system lies within a predetermined temperature range representative of an acceptable user comfort level variation; and
generate a notification if the new temperature setting is outside the predetermined temperature range.

7. The RAC system of claim 6, configured to adjust a ventilation setting of the RAC if the renewable energy supply and/or the maximum power limit are not sufficient for operating the RAC system.

8. The RAC system of claims 6 or 7, configured to
determine a renewable energy forecast for a period;
determine a predicted load for the period;
determine whether the renewable energy forecast is sufficient to meet the predicted load; and
switch operation of the RAC to off-grid if the renewable energy forecast is sufficient to meet the predicted load, or
determine whether a new temperature setting such that the renewable energy forecast is sufficient to meet the predicted load lies within the predetermined temperature range representative of the acceptable user comfort level variation and generate the notification if the new temperature setting is outside the predetermined temperature range.

9. The RAC system of any one of claims 6 to 8, configured to adjust the current temperature setting to an optimum comfort setting if the renewable energy supply and/or the maximum power limit are greater than required for operating the RAC system under the current temperature setting.

10. The RAC system of any one of claims 6 to 9, wherein the predetermined temperature range representative of an acceptable user comfort level variation is based on ASHRAE 55 standard measured based on predicted mean vote, PMV.
